(19) Europäisches Patentamt / European Patent Office / Office européen des brevets

(11) **EP 1 614 509 B1**

(12) **FASCICULE DE BREVET EUROPEEN**

(45) Date de publication et mention
de la délivrance du brevet:
**29.02.2012 Bulletin 2012/09**

(51) Int Cl.:
**B25J 9/16** *(2006.01)*

(21) Numéro de dépôt: **05106096.0**

(22) Date de dépôt: **05.07.2005**

(54) **Procédé de saisie d'un objet par un bras de robot muni d'une caméra**

Verfahren zum Greifen eines Objektes mit einem Roboterarm mit einer Kamera

Method for grasping an object using a robot arm with a camera

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **06.07.2004 FR 0451452**

(43) Date de publication de la demande:
**11.01.2006 Bulletin 2006/02**

(73) Titulaire: **Commissariat à l'Énergie Atomique et aux Énergies Alternatives
75015 Paris (FR)**

(72) Inventeur: **LEROUX, Christophe
78000, VERSAILLES (FR)**

(74) Mandataire: **Poulin, Gérard et al
BREVALEX
95, rue d'Amsterdam
75378 Paris Cedex 8 (FR)**

(56) Documents cités:
- SMITH C E ET AL: "Using vision-based control techniques for grasping objects", SYSTEMS, MAN AND CYBERNETICS, 1995. INTELLIGENT SYSTEMS FOR THE 21ST CENTURY., IEEE INTERNATIONAL CONFERENCE ON VANCOUVER, BC, CANADA 22-25 OCT. 1995, NEW YORK, NY, USA,IEEE, US, vol. 5, 22 octobre 1995 (1995-10-22), pages 4434-4439, XP010194891, ISBN: 0-7803-2559-1
- REMBOLD D ET AL: "Detection and handling of moving objects", INDUSTRIAL ELECTRONICS SOCIETY, 1998. IECON '98. PROCEEDINGS OF THE 24TH ANNUAL CONFERENCE OF THE IEEE AACHEN, GERMANY 31 AUG.-4 SEPT. 1998, NEW YORK, NY, USA,IEEE, US, vol. 3, 31 août 1998 (1998-08-31), pages 1332-1337, XP010308301, ISBN: 0-7803-4503-7
- BURSCHKA D ET AL: "Principles and practice of real-time visual tracking for navigation and mapping", ROBOT SENSING, 2004. ROSE 2004. INTERNATIONAL WORKSHOP ON GRAZ, AUSTRIA MAY 24-25, 2004, PISCATAWAY, NJ, USA,IEEE, 24 mai 2004 (2004-05-24), pages 1-8, XP010712558, ISBN: 0-7803-8296-X

# Description

Le sujet de cette invention est un procédé de saisie d'un objet par un bras de robot muni d'une caméra.

La caméra prend des images de l'objet à atteindre et de son environnement pendant les déplacements du bras et guide celui-ci vers l'objet. Un ordinateur est utilisé pour localiser l'objet et déterminer sa position par rapport à la terminaison du bras d'après les images, calculer la commande à envoyer au bras pour amener la terminaison à l'objet à saisir, et transmettre cette commande au bras. L'instrument de préhension à la terminaison du bras est fermé à la fin du mouvement du bras pour saisir l'objet. Les commandes peuvent être recalculées à mesure que le bras se déplace et que de nouvelles images sont considérées.

Il est connu que certaines informations de position des objets dans le champ d'une caméra peuvent être déduites de la position de leur représentation sur l'image par la connaissance des paramètres de la caméra comme la distance focale, l'angle d'ouverture, ou la distorsion. Ces informations sont cependant incomplètes puisqu'un point de l'image est associé à une droite de projection de l'environnement, en tout point duquel la surface de l'objet examiné peut se trouver. Il existe cependant des procédés où des calculs de rétro-projection menés à l'aide de renseignements supplémentaires donnent la position de l'objet disposé devant une caméra par les positions de points déterminés de l'objet dans l'image : si l'ordinateur connaît les positions relatives de ces points sur l'objet, il peut déterminer la distance et l'orientation de l'objet par rapport à la caméra en plus de sa direction. On utilise en pratique des points de marquage de l'objet consistant en pastilles réfléchissantes ou colorées dont les positions relatives sur l'objet sont connues. En repérant ces points et déterminant leur disposition sur l'image, l'ordinateur de traitement déduit la distance et l'orientation de l'objet par rapport à la caméra, en plus de sa direction, donnée par les lignes de projection menant aux points de marquage. Ces procédés sont assez efficaces mais ne concernent pas la saisie d'objets usuels qu'il n'est pas question de marquer ; et ils échouent quand des orientations défavorables de l'objet cachent les points de marquage.

Un autre procédé usuel consiste en un apprentissage de la position de l'objet, qui est indiquée par l'opérateur à l'ordinateur. La caméra permet d'ajuster la position de l'objet à mesure qu'il se détache du fond de l'image pendant l'approche du bras. Ce procédé est cependant très sensible aux erreurs, l'objet ne pouvant généralement pas être atteint quand sa position n'a pas été bien indiquée, ou qu'il a bougé pendant le procédé.

L'invention a pour but une meilleure localisation de l'objet à saisir pendant le déplacement du bras et de la caméra. Dans une chaîne d'images comprenant au moins deux images de la caméra, les points sont sélectionnés à l'aide d'un algorithme dans chacune des images, des déplacements entre les points sélectionnés de chacune des images et les points sélectionnés d'au moins une autre desdites images sont calculés et recensés, un des déplacements, recensé un nombre majoritaire de fois, est sélectionné et attribué à des points appartenant à l'objet, et les coordonnées desdits points appartenant à l'objet sont calculées d'après le déplacement sélectionné et un déplacement, mesuré, de la caméra entre les images entre lesquelles le déplacement sélectionné est observé.

Il n'y a donc plus d'apprentissage de la position de l'objet, ni de marquage, ni même d'identification de l'objet ou de détails de celui-ci, Tout au plus et éventuellement une simple désignation de l'objet sur l'image de départ, après quoi le bras se dirige vers lui sans intervention nouvelle de l'opérateur.

Certaines caractéristiques de l'invention apparaîtront mieux à la description détaillée des figures suivantes :

- la figure 1 est une vue générale des éléments d'une application du procédé,
- la figure 2 explicite la méthode de localisation de l'objet sur l'image,
- la figure 3 explicite le critère de sélection du mouvement de l'objet d'une image à l'autre,
- et la figure 4 explicite le mode de calcul de la position de l'objet.

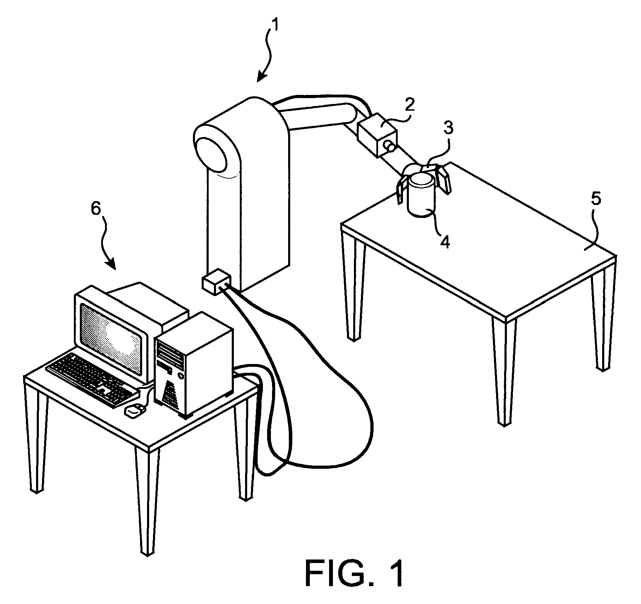

Une application importante de l'invention est l'assistance aux infirmes. Des bras de robot dont la commande n'exige que des capacités physiques réduites existent déjà pour leur procurer de l'assistance, mais les difficultés mentionnées plus haut pour les commander font qu'ils sont souvent lents à accomplir correctement leur tâches. Nous illustrons, à la figure 1, un bras de robot 1 équipé d'une caméra 2 et finissant sur une pince 3 qui doit ici atteindre un objet tel qu'une boîte de boisson 4 posée sur une table 5. L'opérateur dispose d'un ordinateur 6 à écran et clavier pour commander le bras.

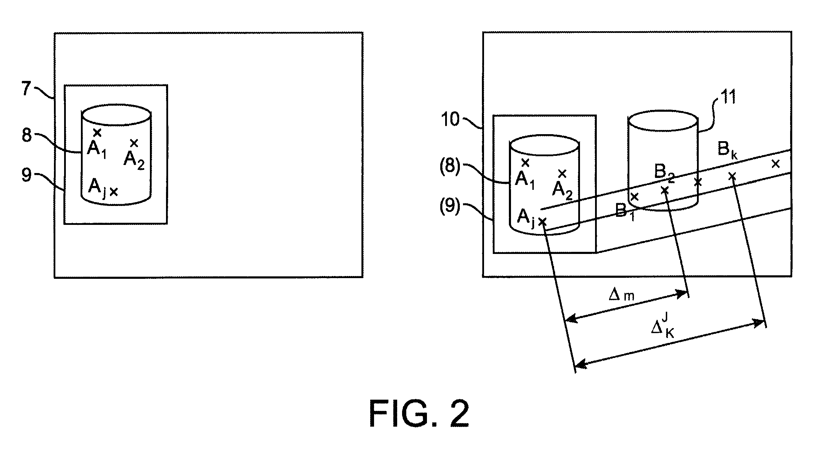

La caméra 2 prend une image de l'environnement situé devant elle, qu'on représente à la partie de gauche de la figure 2 à l'instant considéré. Cette image de l'environnement porte la référence 7 et comprend notamment une image de l'objet 8.

Le procédé de localisation conforme à l'invention est mis en oeuvre. Il comprend la sélection d'un certains nombre de points sur l'image 7. Des techniques connues sont les détecteurs de Moravec, les détecteurs de Harris et Stephens, et le filtre SUSAN. Elles comprennent souvent une analyse de l'image 7 permettant de distinguer ses singularités, comme les limites des éléments qu'elle représente, d'après les variations brusques de luminosité d'un point de l'image à un autre. Les points sélectionnés peuvent être par exemple les angles des lignes de séparation entre les éléments. Il faut remarquer que la sélection des points ne dépend pas de l'opérateur mais du programme seul, et qu'elle reste inconnue de l'opérateur ; toutefois, il peut limiter la sélection des points pour cette première image 7 aux régions comprenant l'image de l'objet 8 et ses alentours, en spécifiant par exemple un cadre 9 hors duquel les points sélectionnés sont écartés. Les points sélectionnés finalement sont notés par la lettre A suivie d'un indice numérique 1,2, etc.

Un premier mouvement du bras 1 est entrepris, et la caméra 2 prend une autre image 10 dans laquelle l'image de l'objet a la référence 11. L'algorithme de sélection des points est remis en marche et donne une nouvelle sélection de points, notés par la lettre B et un indice numérique. Aux fins de l'explication on représente en superposition l'ancienne image de l'objet 8, bien qu'elle soit invisible sur cette image-ci 10.

L'étape suivante consiste à recenser les déplacements entre les positions des points A sur l'ancienne image 7 prise par la caméra 2 et les positions des points B sur cette image-ci 10. Ces déplacements sont notés $\Delta jk$ entre le point Aj et le point Bk. Tous les point A et tous les points B sont ainsi appariés par un déplacement, sauf à ne retenir que les déplacements compatibles avec une contrainte épipolaire qui dépend du déplacement de la caméra 2 entre les prises des images 7 et 10 : on ne cherche à apparier à un point A que les points B présents dans une zone où on s'attend à trouver maintenant ce point A en fonction du déplacement de la caméra 2 ce qu'on peut estimer d'après le rapport des mouvements horizontaux et verticaux de la caméra 2 (en X et Y) dans le plan des images, qui permet d'estimer la direction de déplacement de l'image de l'objet sur les images prise en négligeant les points B présents ailleurs et notamment ceux qui sont trop éloignés ou dans des directions incorrectes sur l'image 10.

L'utilisation de coordonnées polaires pour estimer les déplacements permet ainsi de faire successivement une sélection d'après les angles des déplacements $\Delta jk$ sur les images, puis une autre sélection d'après les valeurs de $\Delta jk$.

Une autre façon d'éviter les d'appariements exhaustifs entre tous les points A et B consisterait à utiliser les méthodes de relaxation ou des appariements obtenus par échantillonnage aléatoire.

Les déplacements $\Delta jk$ entre tous les points A et tous les points B dans les limites d'exhaustivité calculés sont ensuite recensés et ceux dont les valeurs sont presque semblables sont regroupés.

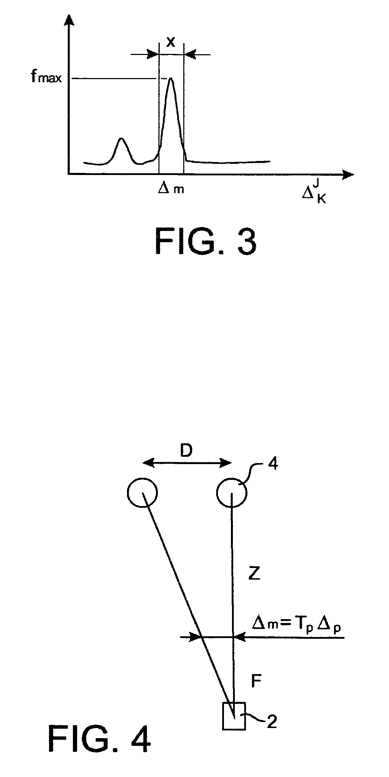

On cherche alors la valeur $\Delta m$ de déplacement la plus fréquente pour les $\Delta jk$ dans une tolérance Xa (figure 3). Ce déplacement $\Delta m$ est supposé être celui de l'image de l'objet 8 ou 11 entre les deux images 7 et 10 sans que tous les points A et B qui ont été sélectionnés aient nécessairement été appariés. Ce critère purement statistique de détermination du déplacement de l'image de l'objet est fondé sur l'hypothèse que l'objet 4 possède le plus de points qui seront sélectionnés d'une image à une autre et possède donc le contenu prépondérant des images surtout si un critère de désignation d'une image de l'objet 9 dans l'image 7 prise par la caméra 2 a été appliqué. Le reste des images, souvent composé de portions de fond, possède comparativement moins de points et aussi moins de points qui pourront être appariés d'une image à une autre puisque les déplacements de la caméra feront sortir les points sélectionnés situés à des bords des images pour l'image suivante. De plus, les paires de points qu'on aura pu apparier hors de l'objet 2 étant à des plans différents, elles subiront des déplacements différents entre les images 7 et seront donc dans des catégories minoritaires de déplacements. Il faut encore remarquer que la méthode donne de bons résultats encore si l'objet 4 déborde de l'image globale ou s'il est partiellement masqué, puisqu'elle s'applique même si certains points sélectionnés A ou B appartenant effectivement à l'objet 4 n'ont pu être appariés. Une fois la position de l'image de l'objet 11 estimée sur l'image suivante 10, le déplacement $\Delta m$ sélectionné est utilisé pour donner une estimation de la position de l'objet 4 par rapport à la caméra 2, comme le montrent les équations suivantes d'après les notations de la figure 4. Le déplacement de l'objet 4 par rapport à une caméra 2 fixe, représenté à la figure 4, est équivalent au déplacement réel de la caméra 2 par rapport à l'objet 4.

On distingue la relation :

$$\Delta_m = T_p \Delta_p$$

où $\Delta_m$ et $T_p$ sont exprimés en mm, $\Delta_p$ est le déplacement en pixels de l'objet entre les deux images (sans dimension) et $T_p$ représente la taille d'un pixel sur l'image de la caméra 2. On calcule alors les coordonnées de l'objet 4 :

$$Z = F \ (D/(\Delta_p T_P) - 1)$$

Où

- Z est la distance du foyer de la caméra 2 à la surface de l'objet 4 ;
- F est la focale de l'objectif (en mm) ;
- D est le déplacement de la caméra 2 entre deux prises d'image (en mm) ;
- $T_p$ est la taille d'un pixel du capteur CCD (en mm).

On en déduit alors les autres coordonnées de l'objet 4 :

$$X = X_p T_p (Z + F)/F$$

et

$$Y = Y_p T_p (Z+F) / F,$$

où

- X est l'abscisse de l'objet dans le repère de la caméra (en mm) ;
- Y est l'ordonnée de l'objet dans le repère caméra (en mm) ;
- $X_p$ est l'abscisse de l'objet dans l'image (en pixels, donc sans dimension) ;
- $Y_p$ est l'ordonnée de l'objet dans l'image (en pixels, donc sans dimensions).
  La méthode peut être appliquée à des chaînes de trois images ou plus. Chaque image possède des points caractéristiques qui peuvent être appariés avec un point ou aucun point de l'image précédente et de l'image suivante. Si un point peut se retrouver par appariements sur toutes les images d'une chaîne, il est plus probable qu'il appartient vraiment à l'objet 4, ce qui accroît la fiabilité de la méthode.

L'invention reste utilisable si l'objet 4 est un peu déplacé pendant le processus. Il est retrouvé à un endroit imprévu sur l'image prise après le mouvement et sa position est recalculée ensuite.

Le procédé est mis en oeuvre par un programme contenu dans l'ordinateur 6 et qui fait aussi partie de l'invention. Ce programme comprend tous les moyens nécessaires pour exploiter les images de la caméra 2 et piloter le bras 1 au moyen des traitements numériques et codages d'information nécessaires.

**Revendications**

1. Procédé de saisie d'un objet (4) par un bras de robot (1) muni d'une caméra (2) prenant des images (7, 10) d'un environnement de l'objet incluant l'objet, pendant des déplacements du bras, et comprenant des étapes de localisation de l'objet d'après les images en calculant des coordonnées de points de l'objet dans l'environnement par rapport au bras de robot d'après des positions desdits points sur les images, **caractérisé en ce que** dans une chaîne d'image comprenant au moins deux desdites images, les points sont sélectionnés automatiquement par un algorithme dans chacune des images, des déplacements ($\Delta$jk) entre tous les points sélectionnés (A) de chacune des images et les points sélectionnés (B) d'au moins une autre desdites images sont calculés et recensés, un des déplacements ($\Delta$m), recensé un nombre majoritaire de fois, est sélectionné et attribué à des points appartenant à l'objet, et les coordonnées de position de l'objet sont calculées d'après le déplacement sélectionné et un déplacement, mesuré, de la caméra entre les images entre lesquelles le déplacement sélectionné est observé.

2. Procédé selon la revendication 1, **caractérisé en ce que** les déplacements sont estimés par des paires de coordonnées polaires sur les images.

3. Procédé selon la revendication 1 ou 2, **caractérisé en ce que** les déplacements sont recensés au-dessous de limites découlant de déplacements mesurés de la caméra entre les images.

4. Procédé selon l'une quelconque des revendications 1 à 3, **caractérisé en ce qu'**il comprend une désignation d'une seule portion des images, désignée comme comprenant l'objet, les points sélectionnés étant présents seulement dans ladite portion de l'objet.

5. Programme d'ordinateur comprenant des moyens de codage pour mettre en oeuvre les étapes d'un procédé suivant l'une quelconque des revendications 1 à 4.

**Claims**

1. Process for gripping an object (4) by means of a robot arm (1) equipped with a camera (2) taking images (7, 10) of an environment of the object including the object, during movements of the arm, and comprising steps of locating the object using the images by calculating the coordinates of points of the object in the environment with respect to the robot arm according to positions of the said points in the images, **characterised in that** in a chain of images comprising at least two of the said images, the points are automatically selected by an algorithm in each of the images, the movements ($\Delta$jk) between all of the selected points (A) of each of the images and the selected points (B) of at least one other of the said images are calculated and polled, one of the movements ($\Delta$m), polled a majority of times is elected and attributed to the points belonging to the object, and the positional coordinates of the object are calculated according to the selected movement and a measured movement, of the camera between the images between which the selected movement is observed.

2. Process of claim 1, **characterised in that** the movements are estimated by pairs of polar coordinates on the images.

3. Process of claim 1 or 2, **characterised in that** the movements are polled below limits derived from the measured movements of the camera between the images.

4. Process of any of claims 1 to 3, **characterised in that** it comprises a designation of a single portion of the images, designated as comprising the object, the selected points only being present in the said portion of the object.

5. Computer programme comprising coding means for implementing the steps of a process of any of claims 1 to 4.

**Patentansprüche**

1. Verfahren zum Ergreifen eines Gegenstands bzw. Objekts (4) durch einen Roboter-Arm (1), der mit einer Kamera (2) versehen ist zur Aufnahme von Bildern (7, 10) einer den Gegenstand enthaltenden Objektumgebung während Verschiebungen des Arms, das Verfahren umfassend Stufen bzw. Etappen der Lokalisierung des Gegenstands nach den Bildern unter Berechnung der Koordinaten von Punkten des Gegenstands in der Umgebung relativ bezüglich dem Roboterarm nach den jeweiligen Lagen der genannten Punkte auf den Bildern, **dadurch gekennzeichnet, dass** in einer wenigstens zwei der genannten Bilder umfassenden Bildkette bzw. -folge die Punkte automatisch mittels eines Algorithmus in jedem der Bilder ausgewählt werden, dass Verschiebungen ($\Delta$jk) zwischen allen ausgewählten Punkten (A) jedes der genannten Bilder und den ausgewählten Punkten (B) wenigstens eines anderen der genannten Bilder berechnet und gezählt werden, dass eine der Verschiebungen ($\Delta$m), die eine Mehrzahl von Malen gezähltt wurde, ausgewählt und zu dem Gegenstand gehörenden Punkten zugeordnet wirt, und daß die Lagekoordinaten des Gegenstands nach der ausgewählten Verschiebung und einer, gemessenen, Verschiebung der Kamera zwischen den Bildern berechnet werden, zwischen welchen die ausgewählte Verschiebung beobachtet wird.

2. Verfahren nach Anspruch 1, **dadurch gekennzeichnet, dass** die Verschiebungen nach Maßgabe von Paaren von Polarkoordinaten in den Bildern geschätzt werden.

3. Verfahren nach Anspruch 1 oder Anspruch 2, **dadurch gekennzeichnet, dass** die Verschiebungen unterhalb der Grenzen gezählt werden, die sich aus gemessenen Verschiebungen der Kamera zwischen den Bildern ergeben.

4. Verfahren nach einem beliebigen der Ansprüche 1 bis 3, **dadurch gekennzeichnet, dass** es eine Bezeichnung eines einzigen Teilbereichs der Bilder umfasst, der als den Gegenstand umfassend bezeichnet ist, wobei die ausgewählten Punkte nur in dem genannten Teilbereich des Gegenstands vorliegen.

5. Rechnerprogramm mit Kodierungsmitteln zur Ausführung der Stufen bzw. Etappen eines Verfahrens nach einem beliebigen der Ansprüche 1 bis 4.

# FIG. 1

**FIG. 2**

# FIG. 3

# FIG. 4